# EUROPEAN PATENT APPLICATION

(11) **EP 2 388 853 A1**
(43) Date of publication of application: **23.11.2011**
(21) Application number: 10382132.8
(22) Date of filing: 20.05.2010
(51) Int. Cl.: H01M 14/00, G02F 1/15, H01G 9/20, H01L 31/042, H05B 33/14, H01M 10/0566

(54) **Ionic liquid based electrolytes containing sulfide/polysulfide redox couple and uses thereof**

(71) Applicant: Fundacion Cidetec, 20009 San Sebastián (Guipuzcoa) (ES); Universitat Jaume I, 12006 Castellón De La Plana (ES)
(72) Inventor: Bisquert Mascarell, Juan, 46022, Valencia (ES); Mora Sero', Ivan, 46100, BURJASSOT (ES); Jovanovski, Vasko, 20009, SAN SEBASTIAN (ES); Marcilla Garcia, Rebeca, 20009, SAN SEBASTIAN (ES); Tena Zaera, Ramón, 20009, SAN SEBASTIAN (ES); Mecerreyes Molero, David, 20009, SAN SEBASTIAN (ES); Cabanero Sevillano, Germán, 20009, SAN SEBASTIAN (ES)
(74) Representative: Carpintero Lopez, Francisco

(57) **Abstract**

The present invention relates to inexpensive ionic liquid electrolytes containing sulphide/polysulfide anion and an organic cation serving as a redox electrolyte in electrochemical and/or optoelectronic devices, in particular dye or inorganic semiconductor (thin layer or quantum dot) sensitized solar cells. These ionic liquids have moderate viscosity and can be used without a solvent.

## Description

The present invention relates to inexpensive ionic liquid electrolytes containing sulphide/polysulfide anion and an organic cation serving as a redox electrolyte in electrochemical and/or optoelectronic devices, in particular dye or inorganic semiconductor (thin layer or quantum dot) sensitized solar cells. These ionic liquids have moderate viscosity and can be used without a solvent.

### FIELD OF THE INVENTION

The present invention relates to electrochemical and/or optoelectronic devices. In particular, the document relates to the synthesis and use of new ionic liquid-based electrolytes containing sulfide/polysulfide redox couple.

### BACKGROUND OF THE INVENTION

Photovoltaics is one of the most promising candidates to supply secure, clean, sustainable energy from an abundant source like solar light. However, the production costs of electricity by the present photovoltaic technology, mainly based on silicon, is still relatively high especially with respect to the conventional fossil fuel energy sources. Electrochemical solar cells are an attractive alternative to silicon solar cells mainly in order to decrease the photovoltaic electricity costs.

The dye sensitized solar cell [B. O'Regan et al. Nature 1991, 353, 737] is the best-known example of electrochemical solar cell. However, variants using inorganic sensitizers, such as extremely thin layers [C. Lévy-Clément et al. Adv. Mater. 2005, 17, 1512*]* and quantum dots [A. Zaban et al. Langmuir 1998,14, 3153*,* P.V. Kamat, J. Phys. Chem. C 2008, 112, 18737], are now emerging as appealing alternatives to absorb efficiently a broader spectral part of the solar irradiance. Additionally, quantum dots are especially interesting due to the potential multiple exciton generation [J.E. Murphy et al. J. Am. Chem. soc. 2006, 128, 3241*],* opening wide possibilities to enhance the conversion efficiency.

Electrolytes are a crucial part of the electrochemical devices. In the framework of inorganic sensitized solar cells, the main issue still to be solved is finding a nonvolatile electrolyte encompassing a redox couple that is electrochemically stable, non-corrosive, transparent and compatible with the light absorbing material. l⁻/l₃⁻ has been the most investigated redox couple for dye sensitized solar cells so far. However, it is not compatible with used inorganic sensitizers (CdSe, CdS, CdTe, PbS, InP, InAs, etc. [P.V. Kamat,J. Phys. Chem. C 2008, 112, 18737*])* due to the rapid corrosion of inorganic material. Alternative redox couples such as Fe(CN)₆⁴⁻/Fe(CN)₆³⁻, Fe²⁺/Fe³⁺, and S²⁻/Sₙ²⁻ in aqueous and [Co(o-phen)₃]^{2+/3+} in organic solvent media have then been proposed. Although S²⁻/Sₙ ²⁻ aqueous electrolyte is the most frequently used in the emerging investigations in quantum dot solar cells, the S²⁻/Sₙ²⁻ redox couple remains poorly defined because of the complex chemistry of sulfur species in water. In addition, the eventual corrosion of the chalcogenide compounds in aqueous electrolytes was pointed out as a major problem of photoelectrochemical cells based on single crystal or polycrystalline layers of CdSe [S. Licht et al. Nature 1990, 345, 330].

Because ionic liquids possess favourable properties like negligible vapour pressure and high ionic conductivity, they are very attractive for fabrication of robust electrochemical devices. The use of ionic liquid based electrolytes containing l⁻/l₃⁻ redox couple has been crucial in improving the long-term stability of the dye sensitized solar cells [Y. Bai et al. Nature Mater. 2008, 7,626]*.*

In view of the above, it is an objective of the present invention to provide electrolytes for electrochemical devices that may lead to improved performances. Furthermore, it is an objective to increase the stability of such devices in particular electrochemical solar cells.

It is therefore an object of the present invention to provide a redox electrolyte for electrochemical and/or optoelectronic devices that would overcome the aforementioned drawbacks of previous art and may lead to improved performance, stability and durability of those devices.

It is another object of the present invention to provide an ionic liquid that dissolves sulfur providing a sulfide/polysulfide redox couple which has good stability, high degree of reversibility, low vapour pressure and high thermal and chemical stability. It is another object of the present invention to provide an electrolyte where inorganic semiconductor light absorbers (thin layers or quantum dots) are stable.

It is yet another objective of the present invention to provide new ionic liquid electrolytes or components of new electrolytes that can be favourable applied in these devices. Ionic liquids with negligible vapour pressure are also known as "green" solvents due to their low-toxicity and sustainability. it is thus an objective of the present invention to develop devices for "green" harvest of solar energy.

### SUMMARY OF THE INVENTION

The present inventors discovered a way to prepare a new family of ionic liquids containing hydrogensulfide or sulfide anions with organic cations. These novel ionic liquids with moderate viscosities are able to dissolve elemental sulfur and thus creating a sulfide/polysulfide redox couple directly, hence producing very interesting electrolytes. These water and solvent free electrolytes may improve performance, stability and durability of electrochemical and/or optoelectronic devices, in particular dye or quantum dot sensitized solar cells. This invention immensely improves the prior art of using aqueous sulfide/polysulfide electrolytes in terms of stability and durability for solar cell application.

In the first aspect the present invention provides electrochemical and/or optoelectronic devices containing electrolyte with M₂S (formula 1) and/or MHS (formula 2) ionic liquids, where M is an organic cation.

Another aspect of the present invention affords an electrolyte with formulas 1 and 2 and at least one more room temperature ionic liquid.

Further aspect of the present invention provides an application of the ionic liquids of the invention in an electrochemical and/or optoelectonic device, in particular dye or inorganic semiconductor (thin layer or quantum dot) sensitized solar cell.

Still further aspect of the present invention provides a method of preparation of electrochemical and/or optoelectonic device. The device encompasses a dye or quantum dot sensitised semiconductor electrode a counter electrode and the electrolyte layer held between the two electrodes. The electrolyte contains ionic liquids with formulas 1 and 2 and different amounts of elemental sulfur.

### DETAILED DESCRIPTION OF THE INVENTION

The present invention relates to the topic of electrochemical and/or optoelectronic devices. These devices exploit the interaction or conversion between electric and chemical phenomena. In these devices the charge transport is combined or accompanied with a redox reaction. An optoelectric device takes advantage of the aforementioned phenomena to convert optical energy to electricity (solar cell) or vice versa (electroluminescent device).

The present invention utilizes the ionic liquids redox electrolytes with formulas M₂S/M₂Sₙ (formula 1) and MHS/MHSₙ (formula 2), where M is an organic cation. M bears at least one positive charge. Examples of M have been disclosed in the previous literature, namely in WO 2004/072089, p18, example 9; WO 2007/109907 A1 p10-11 and EP 1819 005 A1, p3-5

The organic cation M comprises at least one charged atom i.e. N⁺, C⁺, P⁺, S⁺ and/or combinations thereof. For example, the organic cation may consist of at least on quaternary nitrogen or phosphorus, ternary sulfur, a carbocation and/or combinations thereof.

Substituents of M may be selected from substituents R defined further below.

### Formulas:

| | | |
|---|---|---|
| 1 | M₂⁺ S²⁻ | M₂⁺Sₙ²⁻ |
| | | |
| 2 | M⁺ HS⁻ | M⁺ HSₙ |

where M is an organic cation with formulas:

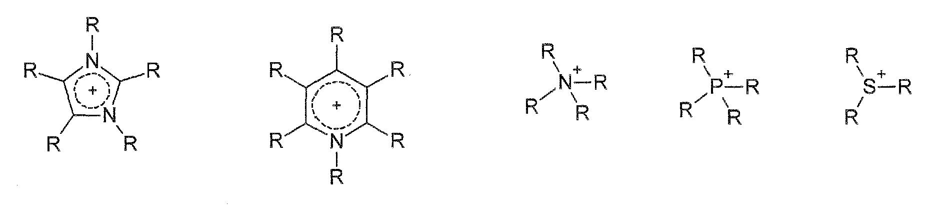

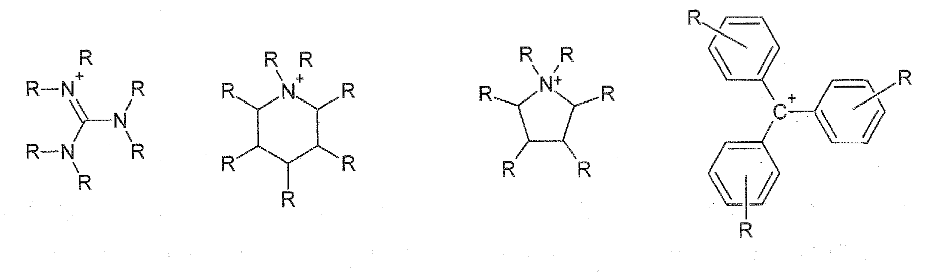

Where R is the same or different and selected from the group consisting of a hydrogen atom, C₁-C₃₀ alkyl which is linear or branched and optionally halogenated, C₃-C₁₂ cycloalkyl, C₁-C₁₂ heterocyclyl, C₂-C₈ alkenyl, C₂-C₈ alkynyl, C₆-C₁₂ aryl, C₆-C₃₀ aralkyl, C₆-C₃₀ alkylaryl, and C₁-C₁₂ heteroaryl, C₆-C₃₀ alkylheteroaryl, and C₆-C₃₀ alkylheterocyclyl, or where two R are a part of a polymer chain or network R is also selected from the group consisting of a hydrogen atom, C₁-C₃₀ alkyl which is linear or branched and optionally halogenated, C₃-C₁₂ cycloalkyl, C₁-C₁₂ heterocyclyl, C₂-C₈ alkenyl, C₂-C₈ alkynyl, C₆-C₁₂ aryl, C₆-C₃₀ aralkyl, C₆-C₃₀ alkylaryl, and C₁-C₁₂ heteroaryl, C₆-C₃₀ alkylheteroaryl, and C₆-C₃₀ alkylheterocyclyl, substituents containing F, CI, Br, I, CF₃, CN, SO₃H, CₙF₂ₙ₊₁, HCₙF₂ₙ₊₁-, CF₃O-, CₙF₂ₙ+₁O-, HCₙF₂ₙ₊₁O-CF₃S-, CₙF₂ₙ₊₁S- HCₙF₂ₙ₊₁S-, CICₙF₂ₙ₊₁-, CICₙF₂ₙ₊₁O-, CICₙF₂ₙ₁S-, BrCₙF₂ₙ₊₁-, BrCₙF₂ₙ₊₁O-, BrCₙF₂ₙ₊₁S-, ICₙF₂ₙ₊₁-, ICₙF₂ₙ₊₁O-, ICₙF₂ₙ₊₁S-, CH₂=CHCₙF₂ₙ₊₁-, CH₂=CHCₙF₂ₙ₊₁O-, CH₂=CHCₙF₂ₙ₊₁S-, R²OCₙF₂ₙ₊₁-, R²OCₙF₂ₙ₊₁O-, R²OCₙF₂ₙ₊₁S-, CF₃CH₂-, CF₃CH₂O-, (CF₃)₂CH-, (CF₃)₂CHO-, CHF₂-, CHF₂O-, CHF₂S-, CCIF₂-, CCIF₂O-, CClF₂S-, CCl₂F-, CCl₂FO-, CClF₂S-, CCl₃- CCl₃O-, C₆F₅-, CF₃C₆F₄-, C₆F₅O-, CF₃C₆F₄O-3,5-(CF₃)₂C₆H₂-, C₆CI₅-, C₆CI₅O-, FSO₂CF₂-, CISO₂(CF₂)ₙ-, ⁻SO₃(CF₂)ₙ-, CO₂(CF₂)ₙ-, FSO₂N⁽⁻⁾SO₂(CF₂)ₙ-, CF₃SO₂N⁽⁻⁾SO₂(CF₂)ₙ-, CₙF₂ₙ₊₁SO₂N⁽⁻⁾SO₂(CF₂)ₙ-, R²SO₂N⁽⁻⁾SO₂(CF₂)ₙ-, FSO₂(CF₂)ₙ-,CISO₂(CF₂)ₙ-, CₙF₂ₙ₊₁SO₂N⁽⁻⁾(CF₂)ₙ-, and R²SO₂N⁽⁻⁾(CF₂)ₙ-

R is part of a polymer chain or network, or absent or optionally includes a heteroatom in the form of -O-, =N-, -S-, =P-, =(P=O)-, -SO-, -SO₂-; F, OH, a C₁-C₆ alkoxy, a C₁-C₆ hydroxy alkyl, NO₂, CF₃, SO₃H, CₙF₂ₙ₊₁, C₁-C₁₂ alkyl which is linear or branched, C₆-C₁₂ aryl, CₙH_{2n+1,} Ph₂P(O)-, Ph₂P-, Me₂P(O)-, Me₂P, Ph₂P(S), Me₂P(S), Ph₃P=N-, Me₃P=N-, C₆H₅CₚH₂ₚ-, CₚH₂ₚ₊₁C₆H₄-, CₚH₂ₚ₊₁C₆H₄CₙH₂ₙ-, CH₂₌CHCₚH₂ₚ- , CH₂=CHC₆H₅-, CH₂=CHC₆H₄CₚH₂ₚ₊₁-, and CH₂=CHCₚH₂ₚC₆H₄-; where n is an integer having a value from 1 to 48;m is an integer having a value from 2 to 12; and p is an integer having a value from 1 to 48.

The compositions of the present invention can further contain a solvent selected from the group consisting of nitriles (such as CH₃CN), CH₂CI₂, alcohols (such as ethanol, isopropanol), DMSO, amides (such as DMF), hexane, heptane, toluene, linear carbonates (such as dimethylcarbonate, diethylcarbonate, ethylmethylcarbonate), cyclic esters (such as ethylene carbonate, propylene carbonate), urea (tetramethylurea), ionic liquids such as dialkylimidazolium, trialkylsulfonium, and quaternary amine (such as C₁-C₂₀ tetraalkylammonium) and quaternary phosphonium (such as C₁-C₂₀ tetraalkylphosphonium or C₆-C₁₂ tetraarylphosphonium) salts associated with stable anion such as (FSO₂)₂N-, (CF₃SO₂)₂N⁻, (C₂F₅SO₂)₂N⁻, (CF₃SO₂)₃C⁻, CF₃SO₃, CF₃COO⁻, AsF₆, CH₃COO⁻, (CN)₂N⁻, (CN)₃C⁻, NO₃⁻ 2.3HF, CI⁻, Br⁻, I⁻, PF₆⁻, BF₄⁻, CIO₄⁻ SCN⁻, and mixtures thereof. Preferably, the solvent is nitriles (such as CH₃CN), amides (such as DMF), linear carbonates (such as dimethylcarbonate, diethylcarbonate, ethylmothylcarbonate), cyclic esters (such as ethylene carbonate, propylene carbonate), ionic liquids such as dialkylimidazolium, trialkylsulfonium, and quaternary amine (such as C₁-C₂₀ tetraalkylammonium) and quaternary phosphonium (such as C₁-C₂₀ tetraalkylphosphonium or C₆-C₁₂ tetraarylphosphonium) salts associated with stable anion such as (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻,(CN)₃C⁻, NO₃⁻, 2.3HF, CI⁻, Br⁻, I⁻, PF₆⁻, BF₄⁻, CIO₄⁻, SCN⁻ and mixtures thereof.

In the compositions of the present invention, the compound is preferably present in the composition in a molar ratio of about 0.1 to about 99.9 % and the second compound is present in a molar ratio about 99.9 to about 0.1 %. More preferably, the first compound is present in the composition in a molar ratio of about 5.0 to about 95.0 % and the second compound is present in a molar ratio about 95.0 to about 5.0 %. More preferably, the first compound is present in the composition in a molar ratio of about 5.0 to about 95.0 % and the second compound is present in a molar ratio about 95.0 to about 5.0 %.

Whether the electrolyte of the invention includes solvent or not there may further be comprised a polymer as a gelling agent, wherein the polymer is polyvinyldenefluoride and/or its co-polymers, nafion, polyethylene oxide, polypropylene oxide, polymethylmethacrylate, polyacrylonitrile, polyvinylpyrrolidone, polyaniline, polypyrrole, polythiophene and their derivatives. The addition of polymers to the electrolyte is focused on producing quasi- or semisolid composition of the electrolyte for improving the solvent retention and thus increased durability of solar cells.

The electrolyte of the present invention may further include inorganic nanoparticles like ZnS, CdS, for example, which are also capable of enhancing solvent retention.

In a preferred embodiment of the present invention, electrochemical and/or optoelectronic device is a photovoltaic cell, a light emitting device, a battery, an electrochromic device or electrochemical (bio)sensor.

Another preferred embodiment of the present invention, the device is a quantum dot sensitised solar cell. An example of the later is disclosed in US 6,861,722.

Yet another preferred embodiment of the present invention, the device is a dye sensitised solar cell. Examples are disclosed in EP 0 986 079 A2, EP 1 507 307 A1 and EP 1 819 005 A1.

According to a preferred embodiment, in case when the device of the present invention is a solar cell, it encompasses a semiconductor, the electrolyte stated in claims 1-7 and a counter electrode. A preferred embodiment of the invention regarding the semiconductor includes the materials like Si, CdS, ZnO, TiO₂, SnO₂, WO₃, ZnS, CdSe, GaP, GaAs, CdTe, Fe₂O₃, CuInS₂ and/or CuInSe_{2.} The preferred form of semiconductor surface is mesoporous, microporous, in a form of nanowires and/or nanotubes thus immensely increasing the surface optionally covered with a dye or quantum dots and in contact with the electrolyte. The semiconductor is attached preferably on a conductive glass substrate or conductive plastic substrate or a metal foil.

A necessary part of the device of the present invention is a counter electrode. It may be, for example, fluorine doped SnO₂ or indium doped SnO₂ on glass or plastic substrate, optionally coated with Pt or carbon or PEDOT.

The sensitised semiconductor material serves as a photoanode, whereas the counter electrode is a cathode.

### Examples:

### Example 1: Synthesis of the ionic liquid with the formula 2:

In a 100 ml round bottom two necked flask 30 ml of acetone was parched with an inert gas in order to remove the dissolved oxygen. Then 5.07 g (29 mmol) of 1-butyl-3-methylimidazolium chloride *(Green solutions)* was introduced with constant stirring. To this solution 4.15 g of Na₂S x 9H₂O (32 mmol) was added slowly in several portions. The mixture was vigorously stirred, equipped with a condenser and slowly heated to a reflux temperature. It was then refluxed for 12 hours in order for the anion exchange to complete. When the exchange was complete a 2 phase system was observed comprised of a slightly yellow liquid and a white precipitate. The precipitate was filtered away and the solution was isolated in *vacuo.* 3.9 g (78 %) of 1-butyl-3-methylimidazolium hydrogensulfide was obtained.

### Example 2: Synthesis of the ionic liquid with the formula 1:

2 g of the ionic liquid from the example 1 was placed in a 10 ml round bottom flask and parched with inert gas for approximately 30 minutes. Then it was connected with a vacuum pump and slowly heated to 80 °C. It was kept under these conditions for 72 hours. 1.12 g (89 %) of bis-(1-butyl-3-methylimidazolium) sulfide was collected.

### Example 3: Preparation of the redox electrolyte

To 1 g (3.22 mmol) of bis-(1-butyl-3-mathylimidazolium) sulfide an equimolar amount 0.103 g of elemental sulfur was added. Sulfur slowly dissolved and the solution turned brown because of the formation of polysulfides depicted in Raman and UV-vis spectra.

It was found that such compositions are very useful as redox electrolytes. In accordance with another aspect of the invention there is provided a redox couple according to scheme 1 and scheme 2:

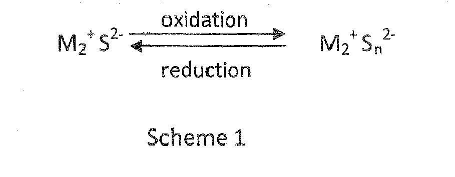

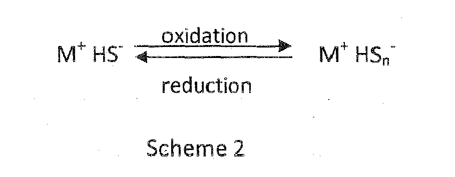

### Example 4: Cyclic voltammetry

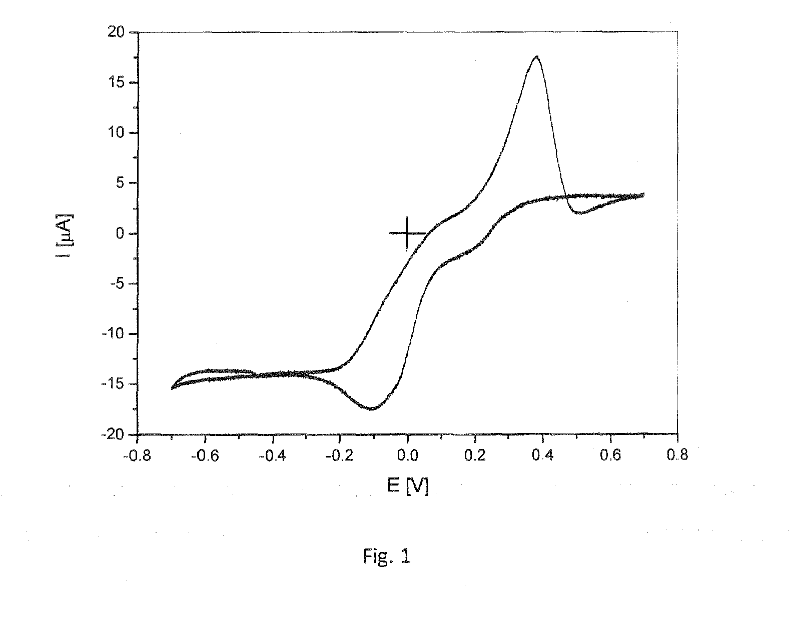

### Example 5: Raman spectroscopy

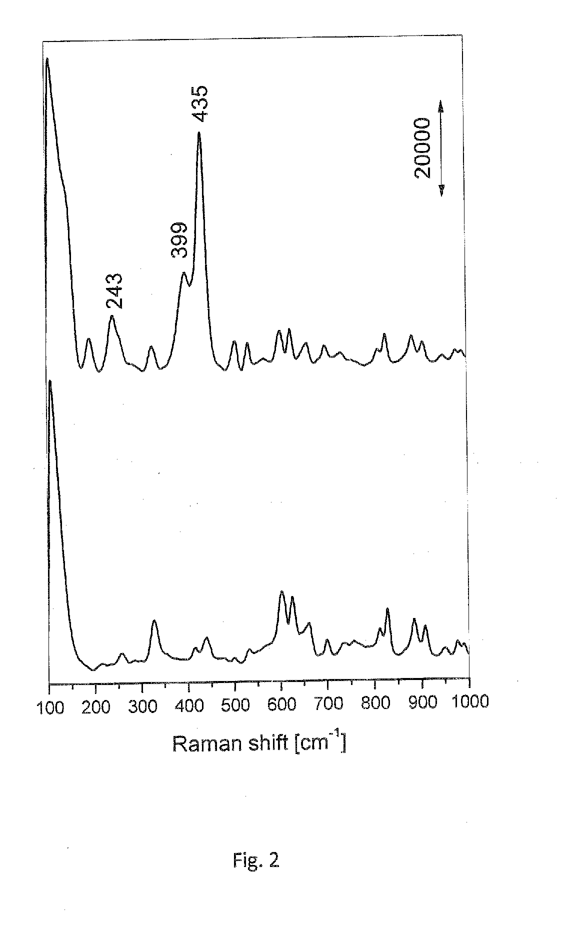

### Example 6: UV-vis spectroscopy

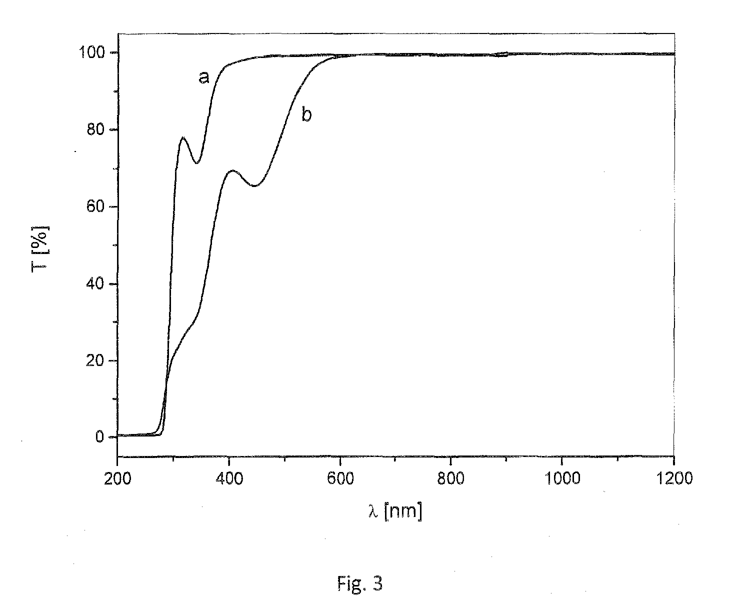

### Example 7: Test of electrolyte in QDSSC

Electrolyte has been tested in a QDSSC cell using CdSe QDs as light absorbing material. To prepare the cell a compact layer of TiO₂ (thickness ∼ 100-200 nm) was deposited by spray pyrolisis of titanium(IV) bis(acetoacetonato) di(isopropanoxylate) (Sigma Aldrich) onto the SnO₂:F (FTO) coated glass electrodes (Pilkington TEC15, 15 Ω/sq resistance). The FTO electrodes were kept at 400 °C during spraying, thus leaving behind a compact layer of TriO2. Subsequently, the coated substrate was fired at 450 °C for 30 min. A commercial 20-450 nm particle size TiO₂ paste (18NR-AO, Dyesol, Queanbeyan, Australia) was deposited on top of the TiO₂ compact layer. Around 0.24 cm² TiO₂ films were deposited by doctor blade and subsequently sintered at 450 °C for 30 min in a muffle-type furnace. The thickness of the sintered TiO₂ films was approximately 10 µm measured by a profilometer Dektack 6 from Veeco. The TiO₂ photoanodes were sensitized with CdSe QDs by chemical bath deposition (CBD) [S. Gorer et al., J. Phys. Chem. 1994, 98, 5338]. Firstly, as the Se source, an 80mM sodium selenosulphate (Na₂SeSO₃) solution was prepared by dissolving elemental Se powder in a 200mM Na₂SO₃ solution. Secondly, 80mM CdSO₄ and 120mM trisodium salt of nitrilotriacetic acid (N(CH₂COONa)₃) were mixed in a volume ratio 1:1. Finally, both solutions were mixed in a volume ratio 1:2. The TiO₂ electrodes were placed in the dark in a glass container filled with the final solution for 30 hours deposition time. All the electrodes were coated with ZnS by twice dipping alternately into 0.1M Zn(CH₃COO)₂ and 0.1M Na₂S solutions for 1 min/dip, rinsing with Milli-Q ultrapure water between dips. The solar cells were prepared by sealing the counter electrode and the QD-sensitized FTO/TiO₂ electrode using a thermoplastic spacer (DuPont™ Surlyn^{®} 1702, thickness 25 µm).with a droplet (10 µl) of electrolyte, 1:1 molar mixture of bis-(1-butyl-3-methylimidazolium) sulfide and sulfur. Thermally platinized FTO has been used as counter electrode.

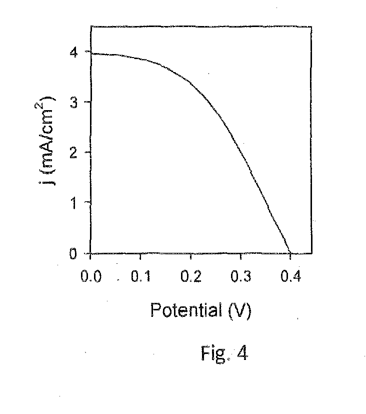

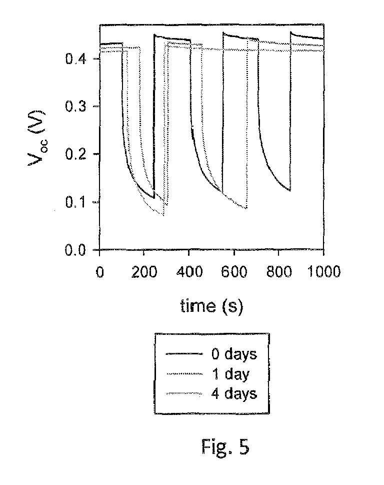

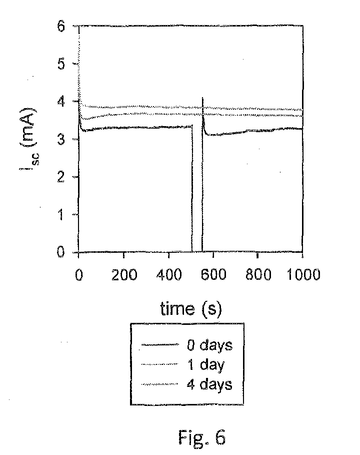

### BRIEF DESCRIPTION OF THE FIGURES

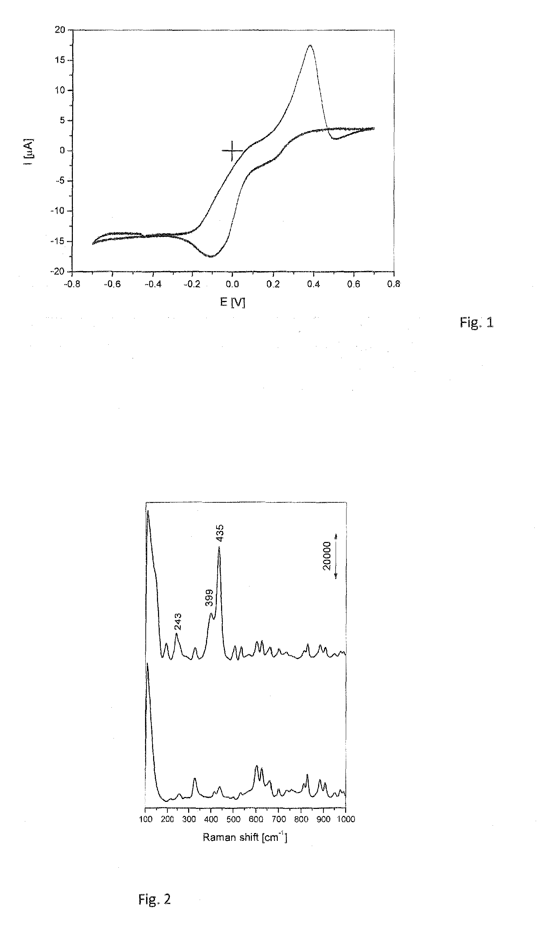

Figure 1: Cyclic voltammetry of 1:1 molar mixture of bis-(1-butyl-3-methylimidazolium) sulfide and sulfur. A 3 electrode system was used consisting of Pt wires as working and counter electrodes, respectively, and a Ag/Ag₂S reference electrode.
Figure 2: Raman spectra of bis-(1-butyl-3-methylimidazolium) sulfide (below) and its 1:1 mixture with sulfur (above). Peaks at 399 and 435 cm⁻¹ depict polysulfide species.

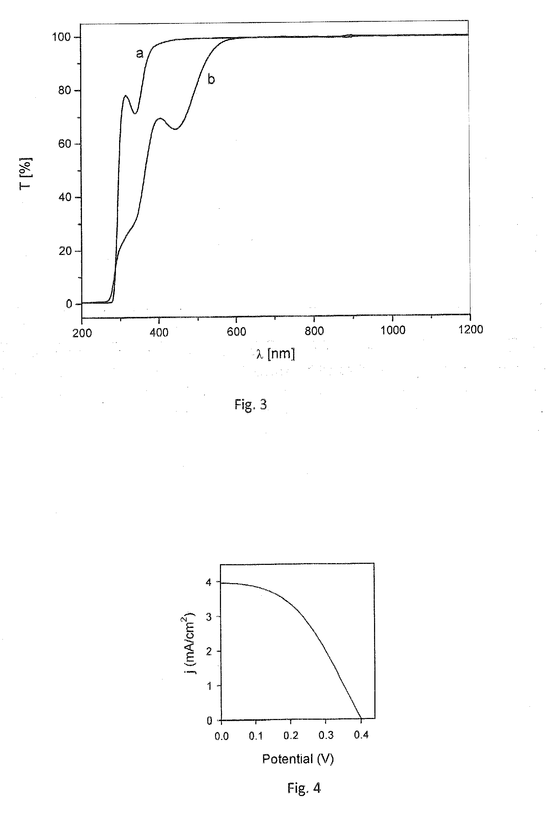

Figure 3: UV-vis spectra of the same system as in Figure 2 (a pure ionic liquid, b mixture with sulfur) confirm the formation of polysulfide species.
Figure 4: Current-Potential curve of a QDSSCs using as electrolyte 1:1 molar mixture of bis-(1-butyl-3-methylimidazolium) sulfide and sulphur. Illumination 1 sun, AM 1.5 G. Solar cell efficiency: 0.71%, FF=0.44, J_{sc}= 3.96 mA/cm², V_{oc}=0.405 V.
Figure 5: Time dependence of open circuit voltage, V_{oc}., taken at different times after cell assembling. Illumination (1 sun, 1.5 AM G) on-off cycles.
Figure 6: Time dependence of short circuit current, I_{sc}, taken at different times after cell assembling. Illumination (1 sun, 1.5 AM G) on-off cycles for sample just assembled.

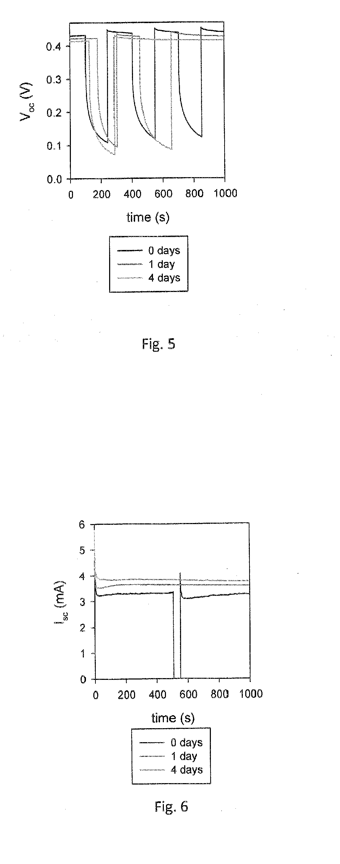

Figure 5: Open circuit illumination

## Claims

1. The ionic liquid redox electrolytes with formulas M₂S/M₂Sₙ (formula 1) and MHS/MHSₙ (formula 2), where M is an organic cation and S is sulfide. M bears at least one positive charge.

2. The ionic liquid in Claim 1 comprises at least one charged atom i.e. N⁺, C⁺, P⁺, S⁺ and/or combinations thereof.

3. Ionic liquid cation M is selected from the group defined further below.
| Formulas: | | |
|---|---|---|
| 1 | M₂⁺ S²⁻ | M₂⁺ Sₙ²⁻ |
| 2 | M⁺ HS⁻ | M⁺ HSₙ⁻ |

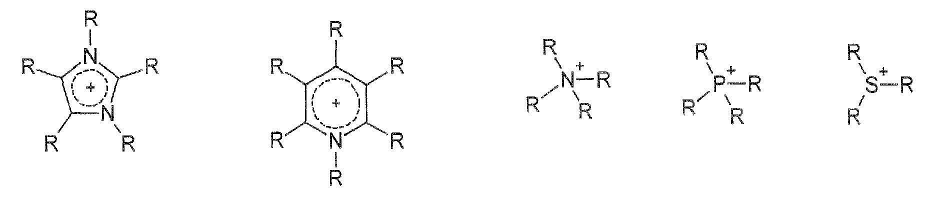 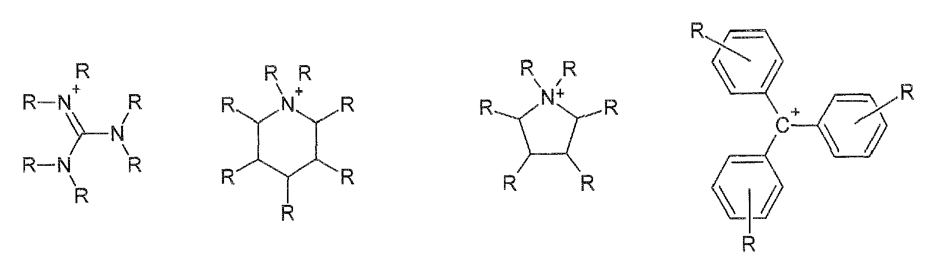
where R is the same or different and selected from the group consisting of a hydrogen atom, C₁-C₃₀ alkyl which is linear or branched and optionally halogenated, C₃-C₁₂ cycloalkyl, C₁-C₁₂ heterocyclyl, C₂-C₈ alkenyl, C₂-C₈ alkynyl, C₆-C₁₂ aryl, C₆-C₃₀ aralkyl, C₆-C₃₀ alkylaryl, and C₁-C₁₂ heteroaryl, C₆-C₃₀ alkylheteroaryl, and C₆-C₃₀ alkylheterocyclyl, or where two R are a part of a polymer chain or network.
R is also selected from the group consisting of a hydrogen atom, C₁-C₃₀ alkyl which is linear or branched and optionally halogenated, C₃-C₁₂ cycloalkyl, C₁-C₁₂ heterocyclyl, C₂-C₈ alkenyl, C₂-C₈ alkynyl, C₆-C₁₂ aryl, C₆-C₃₀ aralkyl, C₆-C₃₀ alkylaryl, and C₁-C₁₂ heteroaryl, C₆-C₃₀ alkylheteroaryl, and C₆-C₃₀ alkylheterocyclyl, substituents containing F, CI, Br, I, CF₃, CN, SO₃H, CₙF₂ₙ₊₁, HCₙF₂ₙ₊₁-, CF₃O-, CₙF₂ₙ₊₁O-, HCₙF₂ₙ₊₁O-, CF₃S-, CₙF₂ₙ₊₁S-, HCₙF₂ₙ₊₁S-, CICₙF₂ₙ₊₁-, CICₙF₂ₙ₊₁O-, CICₙF₂ₙ₊₁S-, BrCₙF₂ₙ₊₁-, BrCₙF₂ₙ₊₁O-, BrCₙF₂ₙ₊₁S-, ICₙF₂ₙ₊₁-, ICₙF₂ₙ₊₁O-, ICₙF₂ₙ₊₁S-, CH₂=CHCₙF₂ₙ₊₁-, CH₂=CHCₙF₂ₙ₊₁O-, CH₂=CHCₙF₂ₙ₊₁S-, R²OCₙF₂ₙ₊₁-, R²OCₙF₂ₙ₊₁O-, R²OCₙF₂ₙ₊₁S-, CF₃CH₂-, CF₃CH₂O-, (CF₃)₂CH-, (CF₃)₂CHO-, CHF₂-, CHF₂O-, CHF₂S-, CCIF₂-, CCIF₂O-, CCIF₂S-, CCI₂F-, CCI₂FO-, CCIF₂S-, CCI₃-, CCI_{3O}-, C₆F₅-, CF₃C₆F₄-, C₆F₅O-, CF₃C₆F₄O-, 3,5-(CF₃)₂C₆H₂-, C₆CI₅-, C₆CI₅O-, FSO₂CF₂-, CISO₂(CF₂)ₙ-, ⁻SO₃(CF₂)ₙ-CO₂(CF)ₙ-, FSO₂N⁽⁻⁾SO₂(CF₂)ₙ-, CF₃SO₂N⁽⁻⁾SO₂(CF₂)ₙ-, CₙF₂ₙ₊₁SO₂N⁽⁻⁾SO₂(CF₂)ₙ-, R²SO₂N⁽⁻⁾SO₂(CF₂)ₙ-, FSO₂(CF₂)ₙ-, CISO₂(CF₂)ₙ-., CₙF₂ₙ₊₁SO₂N⁽⁻⁾(CF₂)ₙ-, and R²SO₂N⁽⁻⁾(CF₂)ₙ-
R is part of a polymer chain or network, or absent or optionally includes a heteroatom in the form of-O-, =N-, -S-, =P-, =(P=O)-, -SO-, -SO₂-; F, OH, a C₁-C₆ alkoxy, a C₁-C₆ hydroxy alkyl, NO₂, CF₃, SO₃H, CₙF₂ₙ₊₁, C₁-C₁₂ alkyl which is linear or branched, C₆-C₁₂ aryl, CₙH₂ₙ₊₁, Ph₂P(O)-, Ph₂P-, Me₂P(O)-, Me₂P, Ph₂P(S), Me₂P(S), Ph₃P=N-, Me₃P=N-, C₆H₅CₚH₂ₚ-, CₚH₂ₚ₊₁C₆H₄-, CₚH₂ₚ₊₁C₆H₄CₙH₂ₙ-, CH₂=CHCₚH₂ₚ-, CH₂=CHC₆H₅-, CH₂=CHC₆H₄CₚH₂ₚ₊₁-, and CH₂=CHCₚH₂ₚC₆H₄-; where n is an integer having a value from 1 to 48; m is an integer having a value from 2 to 12; and p is an integer having a value from 1 to 48.

4. The compositions of the of any preceding claims, wherein stated composition further contains a solvent selected from the group consisting of nitriles (such as CH₃CN), CH₂CI₂, alcohols (such as ethanol, isopropanol), DMSO, amides (such as DMF), hexane, heptane, toluene, linear carbonates (such as dimethylcarbonate, diethylcarbonate, ethylmethylcarbonate), cyclic esters (such as ethylene carbonate, propylene carbonate), urea (tetramethylurea), ionic liquids such as dialkylimidazolium, trialkylsulfonium, and quaternary amine (such as C₁-C₂₀ tetraalkylammonium) and quaternary phosphonium (such as C₁-C₂₀ tetraalkylphosphonium or C₆-C₁₂ tetraarylphosphonium) salts associated with stable anion such as (FSO₂)₂N⁻, (CF₃SO₂)N⁻, (C₂F₅SO₂)N⁻, (CF₃SO₂)₃C⁻, CF₃SO₃⁻, CF₃COO⁻, AsF₆⁻, CH₃COO⁻, (CN)₂N⁻,(CN)₃C⁻, NO₃-, 2.3HF, CI⁻, Br, r PF₆⁻, BF4⁻, C10₄⁻, SCN⁻, and mixtures thereof. Preferably, the solvent is nitriles (such as CH₃CN), amides (such as DMF), linear carbonates (such as dimethylcarbonate, diethylcarbonate, ethylmethylcarbonate), cyclic esters (such as ethylene carbonate, propylene carbonate), ionic liquids such as dialkylimidazolium, trialkylsulfonium, and quaternary amine (such as C₁-C₂₀ tetraalkylammonium) and quaternary phosphonium (such as C₁-C₂₀ tetraalkylphosphonium or C₆-C₁₂ tetraarylphosphonium) salts associated with stable anion such as (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻,(CN)_{3C}⁻, NO₃⁻, 2.3HF, CI⁻, Br⁻, I⁻, PF₆⁻, BF₄⁻, C10₄⁻, SCN⁻ and mixtures thereof.

5. The compositions of the of any preceding claims, wherein stated composition where the first compound is present in the composition in a molar ratio of about 0.1 to about 99.9 % and the second compound is present in a molar ratio about 99.9 to about 0.1 %.

6. The compositions of the of any preceding claims, wherein stated composition further contains a polymer as a gelling agent, wherein the polymer is polyvinyldenefluoride and/or its co-polymers, nafion, polyethylene oxide, polypropylene oxide, polymethylmethacrylate, polyacrylonitrile, polyvinylpyrrolidone, poly(vinyl imidazolium), polyaniline, polypyrrole, polythiophene and their derivatives.

7. The electrolyte, of any of the preceding claims, including inorganic nanoparticles like SiO₂, TiO₂, ZnS and/or CdS.

8. The electrolyte, according to any of the preceding claims, can comprise also other chalcogenides different than S, i.e. Se and Te, Se²⁻ and Te²⁻ and/or mixtures thereof.

9. Use of a composition as defined in any of claims 1 to 8, in a electrochemical and/or optoelectronic device, a photovoltaic cell, a light emitting device, a battery, an electrochromic device or electrochemical (bio)sensor.

10. The device, according to any of the preceding claims, which is a quantum dot, dye and/or dye + quantum dot sensitised solar cell.

11. The sensitised solar cell of any of preceding claims, encompassing a semiconductor material selected from a group of Si, CdS, ZnO, TiO₂, SnO₂, WO_{3,} ZnS, CdSe, GaP, GaAs, CdTe, Fe₂O₃, CuInS₂ and/or CuInSe₂,

12. The device, according to any of the preceding claims, comprises a semiconductor surface which is mesoporous, microporous, in a form of nanowires and/or nanotubes.
